# EUROPEAN PATENT SPECIFICATION

(11) **EP 1 655 516 B1**
(45) Date of publication and mention of the grant of the patent: **17.12.2008**
(21) Application number: 05023755.1
(22) Date of filing: 31.10.2005
(51) Int. Cl.: F16H 59/12, G05G 1/08, G05G 5/00, G05G 5/06

(54) **Shift operation device**
Betätigungsvorrichtung für eine Gangschaltung
Dispositif de commande de changement de vitesse

(30) Priority: 08.11.2004 JP 2004323801
(43) Date of publication of application: 10.05.2006
(73) Proprietor: ALPS ELECTRIC CO., LTD., Tokyo 145-8501 (JP)
(72) Inventor: Nonaka, Kaiji, Ota-ku Tokyo 145-8501 (JP)
(74) Representative: Klunker . Schmitt-Nilson . Hirsch

(56) References cited:
- EP-A- 1 306 582
- WO-A-93/24771
- DE-U1- 9 212 143
- GB-A- 2 361 104
- JP-A- 2001 277 892
- US-A1- 2002 152 828

## Description

### BACKGROUND OF THE INVENTION

### 1. Field of the Invention

The present invention relates to a shift operation device for electronically switching an automatic transmission from a parking state to a shift state.

### 2. Description of the Related Art

Conventionally, an example of a shift operation device includes an operation unit (shift dial) which can be rotated and pushed, a detecting unit for detecting a pushed state and a non-pushed state of the operation unit and detecting switching signals for setting and releasing of parking in the respective states, a rotation detecting unit for detecting rotation state of the operation unit and outputting a select signal of the shift state, and a pop-up unit for switching the operation unit from the pushed state to the non-pushed state. The pop-up unit switches the operation unit from the pushed state to the non-pushed state when a brake is operated (for example, see JP-A-2001-277892 (2-6 pages, Fig. 1) on which the preamble of claim 1 is based). Here, the pop-up unit has a coil spring for pushing back the operation unit in a non-pushed state direction and an electro-magnetic solenoid for locking the operation unit in the pushed state against the pushing back force of the coil spring.

In the shift operation device having the above-described structure, when the brake is operated by a driver in the pushed state of the operation unit, that is, in the state of setting the parking, a brake switch is turned on, the electro-magnetic solenoid is operated by the ON signal, and the operation unit which is locked in the pushed state is released. Accordingly, the operation unit is popped up to the non-pushed state and thus the parking state of the operation unit is released to a shift selectable state.

In the shift operating device having the above-described structure, the parking state can not be released by only manually operating the operation unit, and the operation unit of the parking state does not pop-up to the shift selectable state as long as the brake is not operated. However, for example, when the driver releases the parking, if the foot of the driver accidentally contacts the brake such that the brake operates, since the parking state is released just before the brake is operated by the driver, an actual pop-up timing of the operation unit is different from the operating feeling of the driver. Therefore, the driver feels a sense of incongruity.

### SUMMARY OF THE INVENTION

The invention has been finalized in view of the drawbacks inherent in the related art, and it is an object of the invention to provide a shift operation device which can surely prevent a parking state from being released against the will of a driver.

In order to accomplish the above-described object, according to the invention defined in claim 1, a shift operation device includes: an operation unit which can be rotated and pushed; a push detecting unit which detects a pushed state and a non-pushed state of the operation unit and outputs switching signals for setting and releasing parking in the respective states; a rotation detecting unit which detects a rotation state of the operation unit and outputs a shift select signal; and a pop-up unit which switches the operation unit from the pushed state to the non-pushed state. Here, when a brake is operated and the operation unit is pressed while in the pushed state, the pop-up unit switches the operation unit from the pushed state to the non-pushed state.

In the shift operation device having the above-described structure, only when the brake is operated by a driver and the operation unit is pressed at the same time, the parking state of the operation unit can be released. Accordingly, even if the brake is accidentally operated by the driver, the parking state is not released, and thus the parking state can be surely prevented from being released without the driver's intend.

The pop-up unit may include a press operation detecting unit which detects press operation of the operation unit and an actuator which lifts up the operation unit from the pushed state to the non-pushed state, and, when the brake is operated and the press operation detecting unit detects the press operation, the actuator may lift up the operation unit. Alternatively, the pop-up unit may include a press operation detecting unit which detects press operation of the operation unit, a spring unit which pushes back the operation unit in the non-pushed state direction, and a lock unit which locks the operation unit against the pushing back force of the spring unit, and, when the brake is operated and the press operation detecting unit detects the press operation, the lock unit may release the locked state of the operation unit.

Furthermore, the pop-up unit may include a push lock unit which alternately performs returning control of the operation unit to the non-pushed state and returning control release whenever the operation unit is pressed, a spring unit which pushes back the operation unit in the non-pushed state direction, and a lock unit which locks the operation unit to the pushed state against the pushing back force of the spring unit, and, when the brake is operated, the lock unit may release the locked state of the operation unit. In this case, the push lock unit may be composed of a heart cam tool and so on, and the heart cam tool may include a sliding member which moves together with the operation unit and a cam groove which movably guides the sliding member in lock and lock releasing directions. By this structure, the push lock unit can be realized by a simple structure, and thus the shift operation device can be realized with low cost.

In addition, in the above-mentioned structures, the lock unit may include an electro-magnetic actuator having a movable rod which can move in an engaging and disengaging direction of the operation unit. By this structure, the lock unit can be realized by a simple structure and thus the shift operation device can be realized with low cost.

In the shift operation device according to the invention, only when the brake is operated by the driver and the operation unit is pressed at the same time, the parking state of the operation unit can be released. Accordingly, even if the brake is accidentally operated by the driver, the parking state is not released, and thus the parking state can be surely prevented from being released without the driver's intend.

### BRIEF DESCRIPTION OF THE DRAWINGS

Fig. 1 is a cross-sectional view illustrating a parking setting state of a shift operation device according to a first embodiment of the invention;
Fig. 2 is a cross-sectional view illustrating a state that a shift knob included in the shift operation device is pressed;
Fig. 3 is a cross-sectional view illustrating a pop-up state of the shift knob;
Fig. 4 is a flowchart illustrating an operation of the shift operation device;
Fig. 5 is a cross-sectional view illustrating a parking setting state of a shift operation device according to a second embodiment of the invention;
Fig. 6 is a cross-sectional view illustrating a state in which a shift knob included in the shift operation device is pressed;
Fig. 7 is a cross-sectional view illustrating a pop-up state of the shift knob;
Fig. 8 is a flowchart illustrating an operation of the shift operation device;
Fig. 9 is a cross-sectional view illustrating a parking setting state of a shift operation device according to a third embodiment of the invention;
Fig. 10 is a cross-sectional view illustrating a state when a brake of an electro-magnetic solenoid included in the shift operation device is operated;
Fig. 11 is a cross-sectional view illustrating a state in which a shift knob included in the shift operation device is pressed;
Fig. 12 is a cross-sectional view illustrating a pop-up state of the shift knob; and
Fig. 13 is a flowchart illustrating an operation of the shift operation device.

### DESCRIPTION OF THE PREFERRED EMBODIMENT

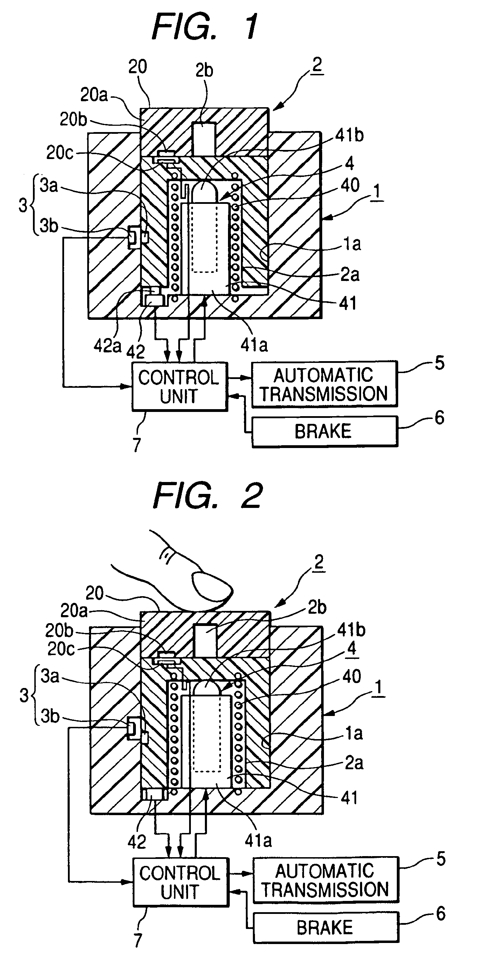

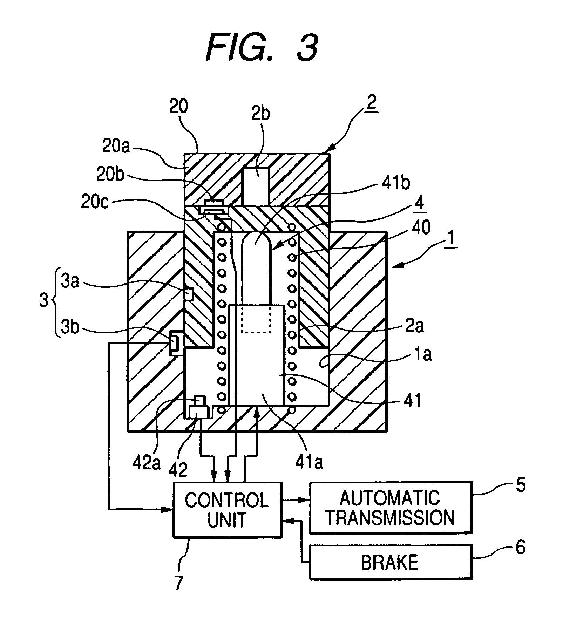

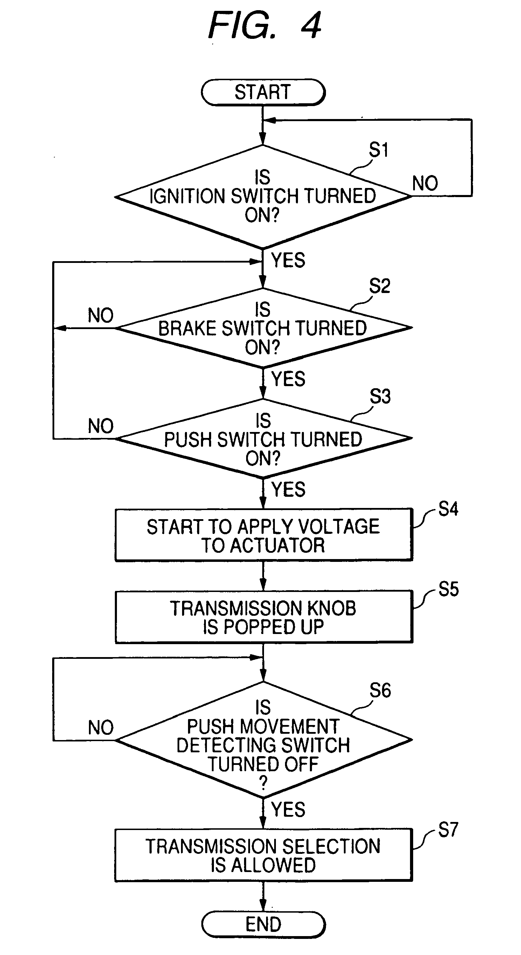

Preferred embodiments of the invention will now be described with reference to the drawings. Fig. 1 is a cross-sectional view illustrating a parking setting state of a shift operation device according to a first embodiment of the invention, Fig. 2 is a cross-sectional view illustrating a state when a shift knob included in the shift operation device is pushed, Fig. 3 is a cross-sectional view illustrating a pop-up state of the shift knob, and Fig. 4 is a flowchart illustrating an operation of the shift operation device.

The shift operation device according to the first embodiment of the invention electronically switches an automatic transmission of a vehicle between a parking state and a shift state, and, as shown in Figs. 1 through 3, mainly includes a housing 1, a columnar shift knob 2 which can be rotated and pushed, a push detecting switch 3 for detecting a pushed state and a non-pushed state of the shift knob 2, a pop-up tool 4 for popping up the shift knob 2, and a control unit 7 for controlling an automatic transmission 5 based on the rotated and pushed state of the shift knob 2 or controlling the pop-up tool 4 based on a predetermined operation of the shift knob 2 and the operation of a brake 6 included in the vehicle. Also, as described below, the automatic transmission 5 is set to the parking state in the pushed state of the shift knob 2 and is set to a parking release state, that is, a shift selectable state in the non-pushed state of the shift knob 2. In the shift selectable state, the automatic transmission 5 is shifted and selected to a predetermined mode by the rotation of the shift knob 2.

A columnar concave portion 1a for opening an upper surface thereof is formed in the housing 1, and the shift knob 2 is vertically movably and rotatably supported in the concave portion 1a. A concave portion 2a for opening a lower surface thereof is formed in the shift knob 2, and the shift knob 2 has a rotary switch 20 at an upper end thereof. The rotary switch 20 includes a rotation unit 20a which can rotate around a rotation shaft 2b, a plurality of magnets 20b which are arranged around the rotation shaft 2b at a lower surface of the rotation unit 20a and correspond to a predetermined shift mode, and a hall element 20c for detecting magnetism of each magnet 20b. The magnetism of a predetermined magnet 20b is detected by the hall element 20c when the rotation unit 20a rotates, and thus a corresponding shift select signal is output from the hall element 20c to the control unit 7.

The push detecting switch 3 includes a magnet 3a buried in the outer circumferential surface of the shift knob 2, and a hall element 3b provided in the housing 1 to be exposed in the inner circumferential surface of the concave portion 1a. In the parking setting state shown in Fig. 1, the magnet 3a faces the hall element 3b and the magnetism of the magnet 3a is detected by the hall element 3b such that the push detecting switch 3 is in an ON state. At this time, this information is output from the hall element 3b to the control unit 7 as a switching signal to the parking setting. Also, if the magnet 3a is separated from the hall element 3b, the magnetic loss of the magnet 3a is detected by the hall element 3b and thus the push detecting switch 3 is turned off. This information is output from the hall element 3b to the control unit 7 as a switching signal to the parking releasing.

The pop-up tool 4 includes a tension spring 40 provided between the shift knob 2 and the housing 1, an actuator 41 provided in the housing 1 to be received in the concave portion 2a of the shift knob 2, and a push switch 42 buried in the inner bottom surface of the concave portion 1a to be opposite to the lower surface of the shift knob 2. Both ends of the tension spring 40 are retained to the upper surface of the concave portion 2a of the shift knob 2 and the inner bottom surface of the concave portion 1a of the housing 1, respectively, and the tension spring 40 always pushes back the shift knob 2 downwardly. At this time, the lower end surface of the shift knob 2 faces an upper surface of the push switch 42. The push switch 42 has an operation unit 42a which is pushed back upwardly by a spring (not shown) and the pushing back force of this spring is set to be larger than pushing back force of the tension spring 40. Accordingly, in the state that the shift knob 2 is not operated, the shift knob 2 does not turn on the operation unit 42a and the push switch 42 is in the OFF state.

The actuator 41 is composed of a linear motor and so on, and has a main body 41a and a movable rod 41b which is supported to the main body 41a so as to be vertically movable. In the state shown in Fig. 1, most of the movable rod 41b is received in the main body 41a and a front end thereof approaches the upper surface of the concave portion 2a of the shift knob 2. Also, when a driving voltage is applied from the control unit 7 to the actuator 41, the movable rod 41b rises by an electro-magnetic force and the upper surface of the concave portion 2a is pushed by the front end of the rising movable rod 41b such that the shift knob 2 is popped up against the pushing back force of the tension spring 40. In addition, when the application of the driving voltage to the actuator 41 stops, a lifting-up force of the movable rod 41b to the shift knob 2 is released and thus the shift knob 2 is returned to the state shown in Fig. 1 by the pushing back force of the tension spring 40. Thus, the movable rod 41b is pushed down by the shift knob 2 to be received in the main body 41a again.

Next, an operation of the shift operation device will be described.

First, the state shown in Fig. 1 is the pushed state of the shift knob 2. At this time, since the magnet 3a provided in the shift knob 2 faces the hall element 3b, the push detecting switch 3 is turned on such that the switching signal to the parking setting state is output from the hall element 3b to the control unit 7. Also, based on this switching signal, the automatic transmission 5 is controlled by the control unit 7 to be set to the parking state. In addition, the driving voltage is not applied from the control unit 7 to the actuator 41, and the lifting-up force is not applied to the shift knob 2 by the movable rod 41b. At this time, only the pushing back force due to the tension spring 40 is applied to the shift knob 2 and thus the push switch 42 is in the OFF state.

In this state, an ignition switch (not shown) is turned on by the driver such that an engine starts up (YES in step S1 of Fig. 4) and then the brake 6 is operated. Further, as shown in Fig. 2, when the shift knob 2 is pressed, if an ON signal from a brake switch (not shown) which is operated by operating the brake 6 and an ON signal from the push switch 42 which is operated by the shift knob 2 are simultaneously detected by the control unit 7 (YES in steps S2 and S3 of Fig. 4), the driving voltage is applied from the control unit 7 to the actuator 41 to drive the movable rod 41b (step S4 of Fig. 4). Accordingly, as shown in Fig. 3, the shift knob 2 is popped up upwardly by the lifting-up force of the movable rod 41b (step S5 of Fig. 4). At this time, if the magnet 3a of the shift knob 2 is separated from the hall element 3b upwardly and the push detecting switch 3 is turned off (YES in step S6 of Fig. 4), a switching signal for releasing the parking state is output from the hall element 3b to the control unit 7 and, based on this switching signal, the automatic transmission 5 is switched from the parking state to the parking release state, that is, the shift selectable state by the control unit 7 (step S7 of Fig. 4). Also, in an initial pop-up state of the shift knob 2, the shift mode is set to a neutral state and shift from the neutral state to a predetermined drive mode or the reverse mode can be selected by operating the rotation unit 20a.

On the other hand, in order to set the automatic transmission 5 to the parking state again, first, the brake 6 is operated by the driver and the parking switch (not shown) is operated in the state in which the vehicle stops. If the switch is in the ON state, the driving voltage supplied from the control unit 7 to the actuator 41 stops. Thus, since the lifting-up force to the movable rod 41b is released, the shift knob 2 is returned to the pushed state of Fig. 1 by the pushing back force of the tension spring 40. At this time, when the magnet 3a moves to a location facing the hall element 3b and the push detecting switch 3 is turned on, the switching signal to the parking state is output from the hall element 3b to the control unit 7 and thus the parking state is set.

In the shift operation device according to the present embodiment, only when the brake 6 is operated by the driver and the shift knob 2 is pressed at the same time, the parking state of the shift knob 2 can be released. Accordingly, even if the brake 6 is accidentally operated by the driver, the parking state is not released and thus the parking state can be surely prevented from being released without the driver's intend. Moreover, when the shift knob 2 is in the pushed state, since the driving voltage is not applied to the actuator 41, power consumption in the parking state can be reduced.

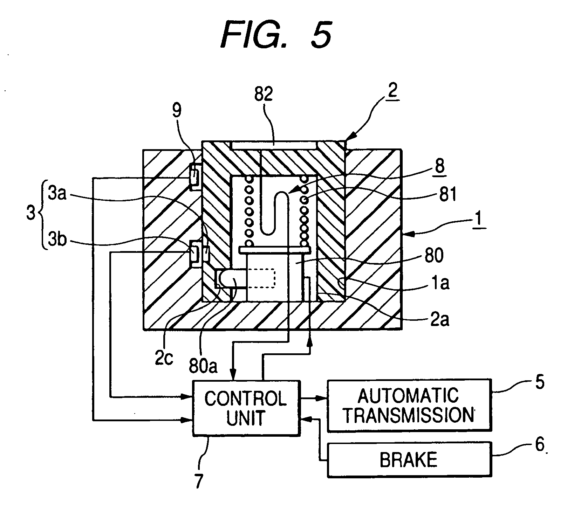

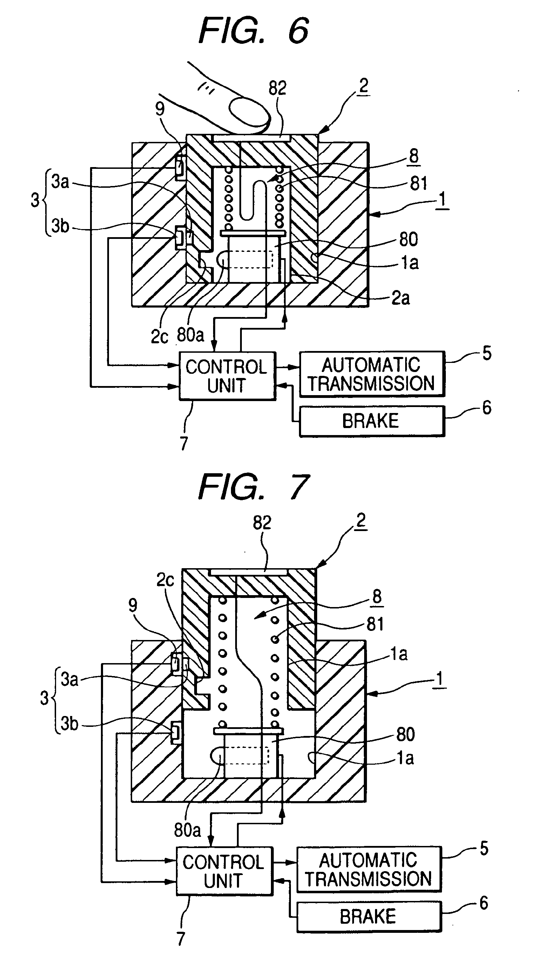

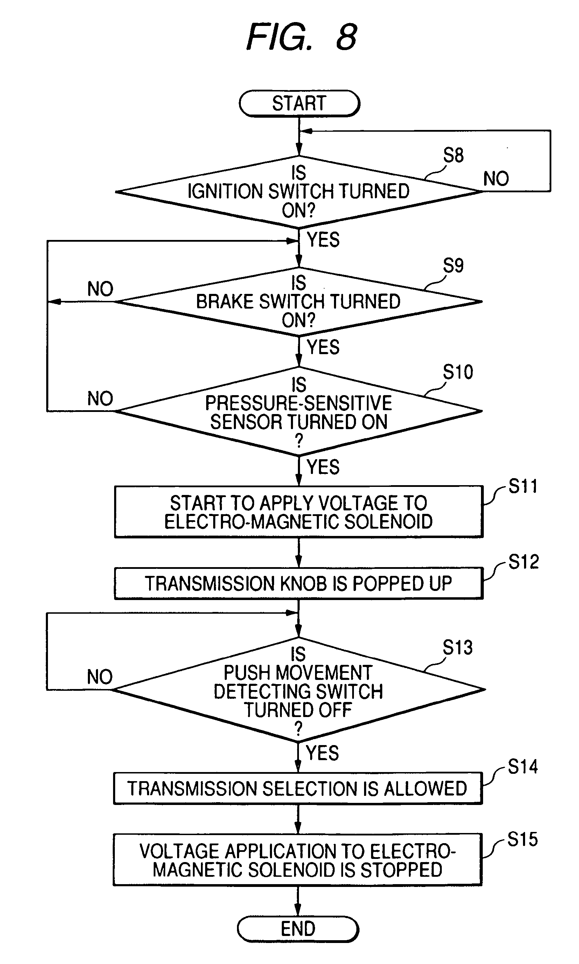

Next, a shift operation device according to a second embodiment of the invention will be described. Fig. 5 is a cross-sectional view illustrating a parking setting state of a shift operation device according to a second embodiment of the invention, Fig. 6 is a cross-sectional view illustrating a state when a shift knob 2 included in the shift operation device is pressed, Fig. 7 is a cross-sectional view illustrating a pop-up state of the shift knob 2, and Fig. 8 is a flowchart illustrating an operation of the shift operation device. Also, elements similar to those of the first embodiment are denoted by the same reference numerals and thus their description will be omitted.

The present embodiment uses a pop-up tool to which the pop-up tool 4 in the first embodiment is modified.

As shown in Figs. 5 through 7, a pop-up tool 8 according to the present embodiment includes an electro-magnetic solenoid 80 provided in a housing 1 to be received in a concave portion 2a of a shift knob 2, a coil spring 81 which is provided between the shift knob 2 and the electro-magnetic solenoid 80 and of which both ends are fixed to an upper surface of the electro-magnetic solenoid 80 and an upper surface of the concave portion 2a of the shift knob 2, and a capacitive-type pressure-sensitive sensor 82 provided on an upper surface of the shift knob 2. Also, the shift knob 2 of the present embodiment does not have a rotary switch 20 as used in the first embodiment, and the shift is selected by rotating the whole popped-up shift knob 2. Here, in order to detect the rotation state of the shift knob 2, a hall element 9 is provided at an inner wall surface of the concave portion 1a facing the magnet 3a which moves upwardly by pop-up. In addition, a plurality of magnets 3a are disposed in an outer circumferential direction of the shift knob 2 in correspondence with a predetermined shift mode.

The electro-magnetic solenoid 80 has a movable rod 80a which moves horizontally, and an engaging hole 2c to and from which a front end of the movable rod 80a is engaged and disengaged is formed in an inner circumferential surface of the concave portion 2a of the shift knob 2. The movable rod 80a is always pushed back in a direction which it is engaged to the engaging hole 2c by a spring member (not shown) and, when the electro-magnetic solenoid 80 is driven by a driving voltage from the control unit 7, the movable rod 80a is driven against the pushing back force of the spring member by a generated electronic force to be separated from the engaging hole 2c. Further, when the driving signal from the control unit 7 stops, the movable rod 80a is engaged to the engaging hole 2c by the pushing back force of the spring member. Also, the coil spring 81 is a spring member for pushing back the shift knob 2 upwardly.

Next, an operation of the shift operation device according to the present embodiment will be described.

The state shown in Fig. 5 is a state in which the driving voltage is not applied from the control unit 7 to the electro-magnetic solenoid 80, and, at this time, the front end of the movable rod 80a is engaged to the engaging hole 2c of the shift knob 2 and thus the shift knob 2 is locked in the pushed state against the pushing back force of the coil spring 81. In this state, since any one of the plurality of magnets 3a provided in the shift knob 2 faces the hall element 3b, a push detecting switch 3 is turned to the ON state such that a switching signal to the parking setting state is output from the hall element 3b to the control unit 7. Further, based on the switching signal, the automatic transmission 5 is controlled by the control unit 7 to be set to the parking state.

In this state, an ignition switch (not shown) is turned on by the driver such that an engine starts up (YES in a step S8 of Fig. 8) and then the brake 6 is operated. Further, as shown in Fig. 6, when the pressure-sensitive sensor 82 on the upper surface of the shift knob 2 is pressed, if an ON signal from a brake switch and an ON signal from the pressure-sensitive sensor 82 are simultaneously detected by the control unit 7 (YES in steps S9 and S10 of Fig. 8), the driving voltage is applied from the control unit 7 to the electro-magnetic solenoid 80 (step S11 of Fig. 8) and then the movable rod 80a is separated from the engaging hole 2c. Thus, as shown in Fig. 7, the lock state of the shift knob 2 is released and the shift knob 2 is popped up upwardly by the pushing back force of the coil spring 81 (step S12 of Fig. 8). At this time, the magnet 3a of the shift knob 2 is separated to an upper side of the hall element 3b and, when the push detecting switch 3 is turned off (YES in step S13 of Fig. 8), a switching signal for releasing the parking state is output from the hall element 3b to the control unit 7. Further, the automatic transmission 5 is switched from the parking state to the shift selectable state by the control unit 7 which receives this switching signal (step S14 of Fig. 8) and the driving voltage supplied to the electro-magnetic solenoid 80 stops (step S15 of Fig. 8) such that the movable rod 80a is returned to the direction of the inner circumferential surface of the concave portion 1a. Also, an initial pop-up state of the shift knob 2, the shift mode is set to a neutral state and shift from the neutral state to a predetermined drive mode or the reverse mode can be selected by rotating the shift knob 2.

On the other hand, in order to set the automatic transmission 5 to the parking state again, first, the brake 6 is operated by the driver and the shift knob 2 is pushed against the pushing back force of the coil spring 81 in the state in which the vehicle stops. At this time, the ON state of the pressure-sensitive sensor 82 is detected by the control unit 7, the driving voltage is applied from the control unit 7 to the electro-magnetic solenoid 80 and the movable rode 80a is separated from the engaging hole 2c. Further, when the shift knob 2 is pushed again such that the magnet 3a moves in a location opposing the hall element 3b, the switching signal to the parking state is output from the hall element 3b to the control unit 7 and, based on the switching signal, supplement of the driving voltage to the electro-magnetic solenoid 80 stops by the control unit 7. Thus, the movable rod 80a is engaged to the engaging hole 2c of the shift knob 2 and, as shown in Fig. 5, the shift knob 2 is locked in the pushed state and the parking state is set.

In the shift operation device according to the present embodiment, the same effect as the first embodiment is obtained. However, in the present embodiment, the electro-magnetic solenoid 80 is used as a lock unit for locking the shift knob 2 in the pushed state and thus the lock unit can be realized by a simple structure, thereby capable of realizing the shift operation device with low cost. In addition, in the parking state and the shift selectable state, the driving voltage need not be continuously supplied to the electro-magnetic solenoid 80 and thus power consumption can be even reduced more.

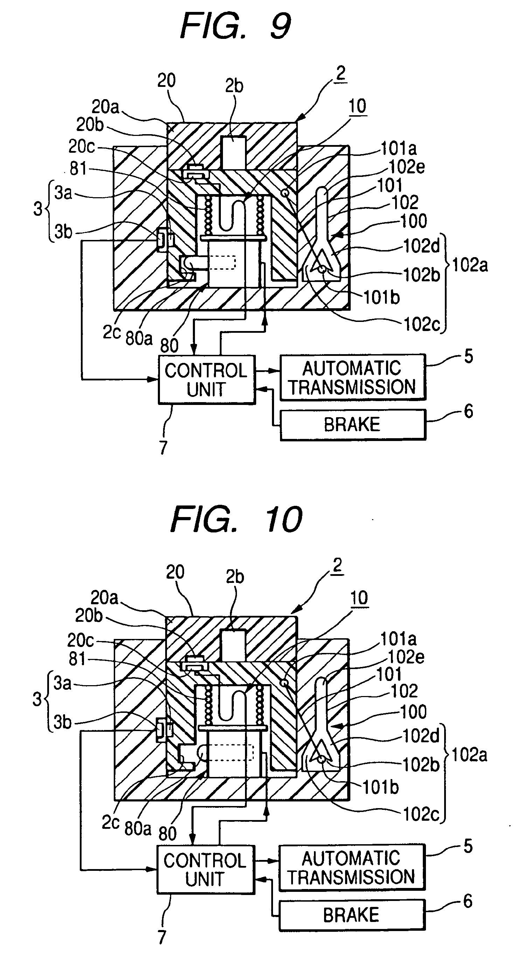

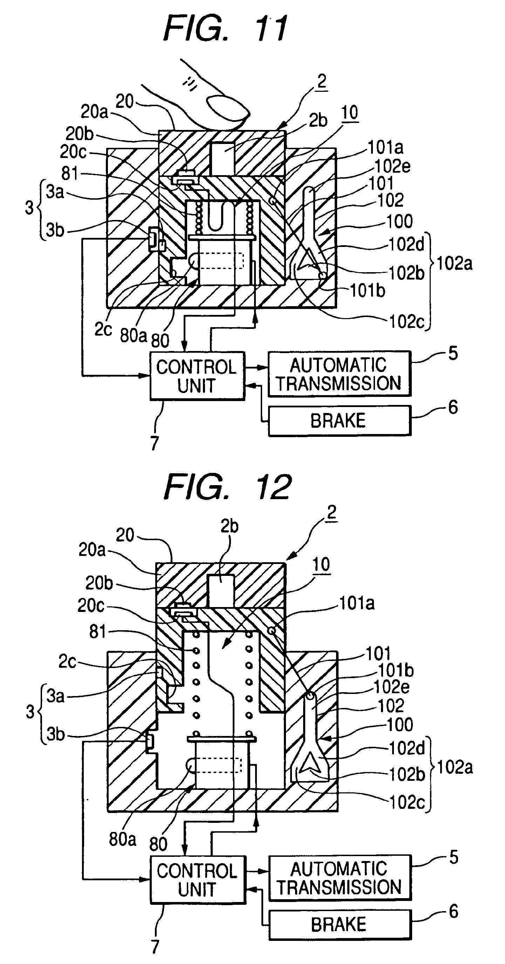

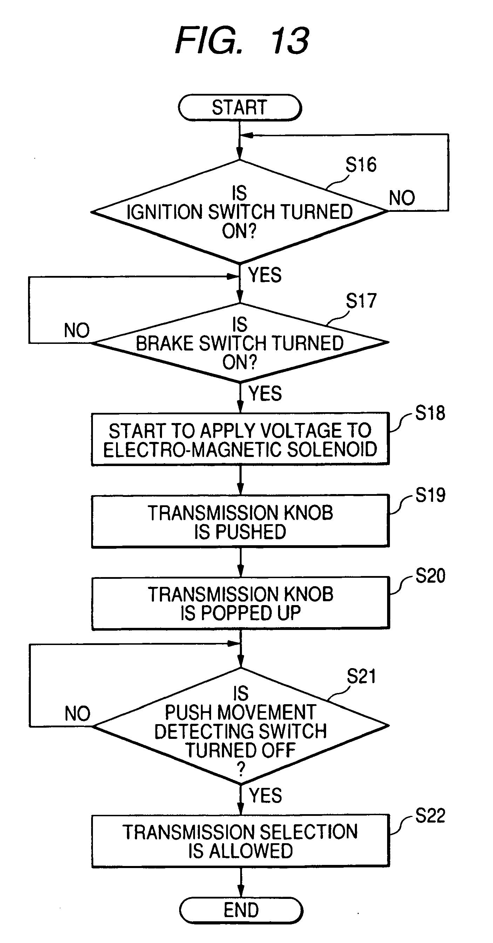

Next, a shift operation device according to a third embodiment of the invention will be described. Fig. 9 is a cross-sectional view illustrating a parking setting state of a shift operation device according to a third embodiment of the invention, Fig. 10 is a cross-sectional view illustrating a state when a brake of an electro-magnetic solenoid included in the shift operation device is operated, Fig. 11 is a cross-sectional view illustrating a state when a shift knob 2 included in the shift operation device is pressed, Fig. 12 is a cross-sectional view illustrating a pop-up state of the shift knob 2, and Fig. 13 is a flowchart illustrating an operation of the shift operation device. Also, the members having the same functions as the first and second embodiments are denoted by the same reference numerals and thus their description will be described.

The present embodiment uses a pop-up tool to which the pop-up tool 4 or 8 in the first or second embodiment is modified.

As shown in Figs. 9 through 12, in the present embodiment, similar to the first embodiment, a rotary switch 20 is provided on the upper end of a shift knob 2 and the shift state is selected by rotating a rotation unit 20a of the rotary switch 20. Accordingly, in the present embodiment, the hall element 9 used in the second embodiment is not provided and only one magnet 3a of the shift knob 2 is provided for detecting the pushed state. Also, a pop-up tool 10 according to the present embodiment has a heart cam tool 100 in addition to an electro-magnetic solenoid 80 and a coil spring 81 which are used in the second embodiment. Further, an engaging hole 2c to and from which a movable rod 80a of the electro-magnetic solenoid 80 is engaged and disengaged is formed in the shift knob 2.

The functions of the electro-magnetic solenoid 80 and the coil spring 81 are similar to those of the second embodiment, and, in the state shown in Fig. 7, the movable rod 80a is engaged to the engaging hole 2c and the shift knob 2 is locked in the pushed state against a pushing back force of the coil spring 81. Further, the movable rod 80a is separated from the engaging hole 2c by a driving voltage from the control unit 7 such that the lock state of the shift knob 2 is released.

The heart cam tool 100 has a coupling pin 101 of which one end 101a is axially supported by the shift knob 2 to be moved together with the shift knob 2 and the other end 101b is rotatably provided, and a cam groove 102 which is formed in a housing 1 and movably guides the other end 101b of the coupling pin 101 in lock and lock releasing directions. The cam groove 102 has a heart cam groove 102a and a guide groove 102e which extends upwardly to the heart cam groove 102a. Also, the heart cam groove 102a has a pin engaging unit 102b for engaging the other end 101b of the coupling pin 101, and an inserting path 102c and a discharge path 102d of the other end 101b. Fig. 7 shows a state when the other end 101b is engaged to the pin engaging unit 102b, and, in this state, when the shift knob 2 is pushed downwardly such that the other end 101b of the coupling pin 101 moves from the discharge path 102d to the guide groove 102e, the lock of the other end 101b is released and thus the control to the non-pushed state of the shift knob 2 is released (see Fig. 11). In addition, when the shift knob 2 released to the non-pushed state is pushed again, the other end 101b of the coupling pin 101 is locked from the guide groove 102e to the pin engaging unit 102b through the inserting path 102c so as to return the shift knob 2 to the non-pushed state. The heart cam tool 100 alternately performs the returning control to the non-pushed state of the shift knob 2 and the returning control release whenever the shift knob 2 is pushed.

Next, an operation of the shift operation device according to the present embodiment will be described.

In the state shown in Fig. 9, similar to the second embodiment, the movable rod 80a is engaged to the engaging hole 2c of the shift knob 2 such that the shift knob 2 is locked in the pushed state against the pushing back force of the coil spring 81. At this time, since the magnet 3a provided in the shift knob 2 faces the hall element 3b, the push detecting switch 3 is turned on and thus a switching signal to the parking setting state is output from the hall element 3b to the control unit 7. Further, based on the switching signal, the automatic transmission 5 is set to the parking state by the control unit 7. Also, in this state, a driving voltage from the control unit 7 is not applied to the electro-magnetic solenoid 80.

In this state, after an ignition switch is turned on by the driver such that an engine starts up (YES in step S16 of Fig. 13), when brake 6 is operated (step S17 of Fig. 13), based on the ON signal from the brake switch, the driving voltage is applied from the control unit 7 to the electro-magnetic solenoid 80 (step S18 of Fig. 13), and the movable rod 80a is separated from the engaging hole 2c, as shown in Fig. 10. In this state, the returning of the shift knob 2 to the non-pushed state is controlled by the heart cam tool 100. Thereafter, as shown in Fig. 11, the shift knob 2 is pushed down to the lower side by the driver (step S19 of Fig. 13), the other end 101b of the coupling pin 101 moves from the pin engaging unit 102b of the cam groove 102 to the guide groove 102e through the discharge path 102c such that the lock state of the other end 101b is released and, as shown in Fig. 12, the shift knob 2 is popped up upwardly by the pushing back force of the coil spring 81 (step S20 of Fig. 13). At this time, the magnet 3a of the shift knob 2 is separated upwardly from the hall element 3b and, when the push detecting switch 3 is turned off (YES in step S21 of Fig. 13), a switching signal for releasing the parking state is output from the hall element 3b to the control unit 7. Further, the automatic transmission 5 is switched from the parking state to the shift selectable state by the control unit 7 which receives this switching signal (step S22 of Fig. 13). Also, in an initial pop-up state of the shift knob 2, the shift mode is set to a neutral state and shift from the neutral state to a predetermined drive mode or the reverse mode can be selected by operating the rotation unit 20a.

Furthermore, in the state when the brake 6 is not operated, since the movable rod 80a is engaged to the engaging hole 2c, the shift knob 2 can not be pushed and the lock state is not released. That is, even though the shift knob 2 is pushed, the shift mode is not switched to the packing releasing state without operating the brake 6.

On the other hand, in order to set the automatic transmission 5 from the state shown in the Fig. 12 to the parking state again, first, the brake 6 is operated by the driver and the shift knob 2 is pushed to the state shown in Fig. 9 against the pushing back force of the coil spring 81 in the state in which the vehicle stops. By pushing the shift knob 2, the other end 101b of the coupling pin 101 is locked from the guide groove 102e to the pin engaging unit 102b through the inserting path 102c and thus the returning of the shift knob 2 to the non-pushed state is controlled. Also, at this time, since the magnet 3a moves to a location in which the magnet 3a faces the hall element 3b, the push detecting switch 3 is turned on such that the switching signal to the parking state is output from the hall element 3b to the control unit 7 and, based on the this switching signal, the driving voltage been supplied to the electro-magnetic solenoid 80 stops. Thus, the movable rod 80a is engaged to the engaging hole 2c of the shift knob 2 and the shift knob 2 is locked in the pushed state of Fig. 7 and the parking state is set.

In the shift operation device according to the present embodiment, the same effect as the first embodiment is obtained. However, in the present embodiment, the heart cam tool 100 is used as a push lock unit for alternately performing the returning control to the non-pushed state and the returning control release of the shift knob 2 whenever the shift knob 2 is pressed and thus the push lock unit can be realized by a simple structure, thereby capable of realizing the shift operation device with low cost. In addition, since the driving voltage is not applied to the electro-magnetic solenoid 80 in the state that the shift knob 2 is pushed, power consumption of the parking state can be even reduced more.

## Claims

1. A shift operation device comprising:
an operation unit (2) which can be rotated and pushed;
a push detecting unit (3) which detects a pushed state and a non-pushed state of the operation unit (2) and outputs switching signals for setting and releasing parking in the respective states;
a rotation detecting unit (20) which detects a rotation state of the operation unit (2) and outputs a shift select signal; and
a pop-up unit (4, 8, 10) which switches the operation unit (2) from the pushed state to the non-pushed state,
**characterized in that**, when a brake (6) is operated and the operation unit (2) is pressed while in the pushed state, the pop-up unit (4, 8, 10) switches the operation unit (2) from the pushed state to the non-pushed state.

2. The shift operation device according to claim 1,
**characterized in that** the pop-up unit (4) includes a press operation detecting unit (42) which detects press operation of the operation unit (2) and an actuator (41) which lifts up the operation unit (2) from the pushed state to the non-pushed state, and, when the brake (6) is operated and the press operation detecting unit (42) detects the press operation, the actuator (41) lifts up the operation unit (2).

3. The shift operation device according to claim 1,
**characterized in that** the pop-up unit (8) includes a press operation detecting unit (82) which detects the press operation of the operation unit (2), a spring unit (81) which pushes back the operation unit (2) in the non-pushed state direction, and a lock unit which locks the operation unit (2) in the pushed state against the pushing back force of the spring unit (81), and, when the brake (6) is operated and the press operation detecting unit (82) detects the press operation, the lock unit releases the locked state of the operation unit (2).

4. The shift operation device according to claim 1,
**characterized in that** the pop-up unit (10) includes a push lock unit (100) which alternately performs returning control of the operation unit (2) to the non-pushed state and returning control release whenever the operation unit (2) is pressed, a spring unit (81) which pushes back the operation unit (2) in the non-pushed state direction, and a lock unit which locks the operation unit (2) in the pushed state against the pushing back force of the spring unit (81), and, when the brake (6) is operated, the lock unit releases the locked state of the operation unit (2).

5. The shift operation device according to claim 3 or 4,
**characterized in that** the push lock unit (100) is composed of a heart cam tool, and the heart cam tool includes a sliding member (101) which moves together with the operation unit (2) and a cam groove (102) which movably guides the sliding member (101) in lock and lock releasing directions.

6. The shift operation device according to claim 3 or 4,
**characterized in that** the lock unit includes an electro-magnetic actuator (80) having a movable rod which can move in an engaging and disengaging direction of the operation unit (2).

## Patentansprüche

1. Gangschaltungs-Betätigungsvorrichtung, aufweisend:
eine Betätigungseinheit (2), die sich drehen und drücken lässt;
eine Drückbetätigungs-Detektionseinheit (3), die einen gedrückten Zustand und einen nicht gedrückten Zustand der Betätigungseinheit (2) detektiert und Schaltsignale zum Einstellen und Lösen des Parkzustands in den jeweiligen Zuständen abgibt;
eine Drehbetätigungs-Detektionseinheit (20), die einen Rotationszustand der Betätigungseinheit (2) detektiert und ein Gangauswählsignal abgibt; und
eine Hochschnelleinheit (4, 8, 10), die die Betätigungseinheit (2) von dem gedrückten Zustand in den nicht gedrückten Zustand schaltet,
**dadurch gekennzeichnet, dass** bei Betätigung einer Bremse (6) und bei Drückbetätigung der Betätigungseinheit (2), während sich diese im gedrückten Zustand befindet, die Hochschnelleinheit (4, 8, 10) die Betätigungseinheit (2) von dem gedrückten Zustand in den nicht gedrückten Zustand schaltet.

2. Gangschaltungs-Betätigungsvorrichtung nach Anspruch 1,
**dadurch gekennzeichnet, dass** die Hochschnelleinheit (4) eine Drückbetätigungs-Detektionseinheit (42), die eine Drückbetätigung der Betätigungseinheit (2) detektiert, sowie einen Aktuator (41) aufweist, der die Betätigungseinheit (2) aus dem gedrückten Zustand in den nicht gedrückten Zustand anhebt, wobei dann, wenn die Bremse (6) betätigt wird und die Drückbetätigungs-Detektionseinheit (42) die Drückbetätigung detektiert, der Aktuator (41) die Betätigungseinheit (2) anhebt.

3. Gangschaltungs-Betätigungsvorrichtung nach Anspruch 1,
**dadurch gekennzeichnet, dass** die Hochschnelleinheit (8) eine Drückbetätigungs-Detektionseinheit (82), die die Drückbetätigung der Betätigungseinheit (2) detektiert, eine Federeinheit (81), die die Betätigungseinheit (2) in Richtung des nicht gedrückten Zustands zurückdrückt, sowie eine Verriegelungseinheit aufweist, die die Betätigungseinheit (2) in dem gedrückten Zustand entgegen der Zurückdrückkraft der Federeinheit (81) verriegelt, wobei dann, wenn die Bremse (6) betätigt wird und die Drückbetätigungs-Detektionseinheit (82) die Drückbetätigung detektiert, die Verriegelungseinheit den verriegelten Zustand der Betätigungseinheit (2) löst.

4. Gangschaltungs-Betätigungsvorrichtung nach Anspruch 1,
**dadurch gekennzeichnet, dass** die Hochschnelleinheit (10) eine Drückverriegelungseinheit (100), die abwechselnd eine Rückführsteuerung der Betätigungseinheit (2) in den nicht gedrückten Zustand sowie ein Lösen der Rückführsteuerung bei jeder Drückbetätigung der Betätigungseinheit (2) ausführt, eine Federeinheit (81), die die Betätigungseinheit (2) in Richtung des nicht gedrückten Zustands zurückdrückt, sowie eine Verriegelungseinheit aufweist, die die Betätigungseinheit (2) in dem gedrückten Zustand entgegen der Zurückdrückkraft der Federeinheit (81) verriegelt, wobei bei Betätigung der Bremse (6) die Verriegelungseinheit den verriegelten Zustand der Betätigungseinheit (2) löst.

5. Gangschaltungs-Betätigungsvorrichtung nach Anspruch 3 oder 4,
**dadurch gekennzeichnet, dass** die Drückverriegelungseinheit (100) durch eine herzförmige Steuerflächeneinrichtung gebildet ist und dass die herzförmige Steuerflächeneinrichtung ein Verschiebeelement (101), das sich zusammen mit der Betätigungseinheit (2) bewegt, sowie eine Steuerflächennut (102) aufweist, die das Verschiebeelement (101) in der Verriegelungsrichtung und der Verriegelungsfreigaberichtung beweglich führt.

6. Gangschaltungs-Betätigungsvorrichtung nach Anspruch 3 oder 4,
**dadurch gekennzeichnet, dass** die Verriegelungseinheit einen elektromagnetischen Aktuator (80) mit einer beweglichen Stange aufweist, die sich in Eingriffsrichtung und in Freigaberichtung der Betätigungseinheit (2) bewegen kann.

## Revendications

1. Dispositif de changement de vitesse comprenant :
une unité fonctionnelle (2) qui peut être tournée et poussée ;
une unité de détection de poussée (3) qui détecte un état poussé et un état non poussé de l'unité fonctionnelle (2) et sort des signaux de commutation pour établir et libérer la position stationnement dans les états respectifs ;
une unité de détection de rotation (20) qui détecte un état de rotation de l'unité fonctionnelle (2) et sort un signal de sélection de changement de vitesse ; et
une unité de rétraction (4, 8, 10) qui commute l'unité fonctionnelle (2) de l'état poussé à l'état non poussé,
**caractérisé en ce que,** quand un frein (6) est actionné et l'unité fonctionnelle (2) est pressée alors qu'elle est dans l'état poussé, l'unité de rétraction (4, 8, 10) commute l'unité fonctionnelle (2) de l'état poussé à l'état non poussé.

2. Dispositif de changement de vitesse selon la revendication 1
**caractérisé en ce que** l'unité de rétraction (4) inclut une unité de détection d'opération de pression (42) qui détecte l'opération de pression de l'unité fonctionnelle (2) et un actionneur (41) qui soulève l'unité fonctionnelle (2) de l'état poussé vers l'état non poussé, et, quand le frein (6) est actionné et l'unité de détection d'opération de pression (42) détecte l'opération de pression, l'actionneur (41) soulève l'unité fonctionnelle (2).

3. Dispositif de changement de vitesse selon la revendication 1
**caractérisé en ce que** l'unité de rétraction (8) inclut une unité de détection d'opération de pression (82) qui détecte l'opération de pression de l'unité fonctionnelle (2), une unité de ressort (81) qui repousse l'unité fonctionnelle (2) dans la direction de l'état non poussé, et une unité de blocage qui bloque l'unité fonctionnelle (2) dans l'état poussé contre la force de rappel de l'unité de ressort (81), et, quand le frein (6) est actionné et l'unité de détection d'opération de pression (42) détecte l'opération de pression, l'unité de blocage libère l'état bloqué de l'unité fonctionnelle (2).

4. Dispositif de changement de vitesse selon la revendication 1,
**caractérisé en ce que** l'unité de rétraction (10) inclut une unité de blocage de poussée (100) qui réalise alternativement la commande de retour de l'unité fonctionnelle (2) vers l'état non poussé et la libération de la commande de retour quand l'unité fonctionnelle (2) est pressée, une unité de ressort (81) qui repousse l'unité fonctionnelle (2) dans la direction de l'état non poussé, et une unité de blocage qui bloque l'unité fonctionnelle (2) dans l'état poussé contre la force de rappel de l'unité de ressort (81), et, quand le frein (6) est actionné, l'unité de blocage libère l'état bloqué de l'unité fonctionnelle (2).

5. Dispositif de changement de vitesse selon la revendication 3 ou 4
**caractérisé en ce que** l'unité de blocage de poussée (100) est composée d'un outil de came en forme de coeur, et l'outil de came en forme de coeur inclut un élément coulissant (101) qui se déplace avec l'unité fonctionnelle (2) et une rainure de came qui guide de manière mobile l'élément coulissant (101) dans les directions de blocage et de déblocage.

6. Dispositif de changement de vitesse selon la revendication 3 ou 4
**caractérisé en ce que** l'unité de blocage inclut un actionneur électromagnétique (80) ayant une tige mobile qui peut se déplacer dans une direction de venue en prise avec et de venue hors de prise de l'unité fonctionnelle (2).
